# EUROPÄISCHE PATENTSCHRIFT

(11) **EP 1 179 491 B1**
(45) Veröffentlichungstag und Bekanntmachung des Hinweises auf die Patenterteilung: **28.04.2004**
(21) Anmeldenummer: 01119270.5
(22) Anmeldetag: 09.08.2001
(51) Int. Cl.: B65G 1/137

(54) **Vorrichtung und Verfahren zur Kommissionierung von Waren**
Method and device for commissioning goods
Dispositif et méthode pour composer un ensemble de marchandises

(30) Priorität: 10.08.2000 DE 10039190
(43) Veröffentlichungstag der Anmeldung: 13.02.2002
(73) Patentinhaber: SIEMENS AKTIENGESELLSCHAFT, 80333 München (DE)
(72) Erfinder: Kalkenbrenner, Jürgen, 90480 Nürnberg (DE)
(74) Vertreter: Berg, Peter, Dipl.-Ing.

(56) Entgegenhaltungen:
- DE-U- 29 724 039
- US-A- 4 527 937

## Beschreibung

Die Erfindung betrifft ein Materialflußsystem in einer Kommissionier-Vorzone eines Regallagers mit einer Mehrzahl von Lagergassen, wobei jeweils Förderstrecken die Regale einer Lagergasse mit der Vorzone verbinden, um Lagereinheiten aus einem Regal der Lagergasse in die Vorzone und aus der Vorzone in ein Regal der Lagergasse zu transportieren und wobei in der Vorzone mindestens ein Kommissionierplatz eingerichtet ist, um Waren aus einer Lagereinheit zu entnehmen und/oder Waren in die Lagereinheit einzubringen. Ferner betrifft die Erfindung ein Verfahren zur Kommissionierung von Waren aus einem derartigen Regallager.

Bei automatischen Behälterlagern, auf die die Erfindung vorzugsweise anwendbar ist, sind beispielsweise in den einzelnen Regalen des Lagers Behälter angeordnet, in denen die Einzelgebinde von Waren, zum Beispiel Schachteln mit Kleinteilen oder Flaschen mit chemischen Substanzen, untergebracht sind. Bei der Kommissionierung werden die Behälter durch ein Regalbediengerät aus den Regalfächern entnommen und auf eine Fördereinrichtung gebracht, welche sie einem Kommissionierplatz zuführt. Die ganz oder teilweise geleerten oder mit anderen Waren aufgefüllten Behälter wandern dann über die Fördereinrichtung zurück zu der Lagergasse, wo sie mit dem Regalbediengerät in das gleiche oder in ein anderes Regalfach gelegt werden. Üblicherweise werden auf dem Weg zu dem Kommissionierplatz die Materialströme von verschiedenen Lagergassen zusammengefaßt und über einen Umlauf oder Sortierkreis dem Kommissionierplatz (oder den Kommissionierplätzen) zugeführt und über den gleichen Kreis wieder abgeführt. Bei diesem System summieren sich in den Kreuzungspunkten die Materialströme, so daß über bestimmte Teilstrecken der Fördereinrichtungen jeweils die Materialströme von mehreren Lagergassen gleichzeitig transportiert werden müssen. Solche mehrfach belasteten Teilstrecken bestimmen dann aber den Durchsatz der gesamten Anlage.

Aus der DE 197 19 651 A1 ist eine Anlage zum Kommissionieren bekannt, bei der jeweils eine Mehrzahl von Kommissionierplätzen entlang den Regalen auf deren Rückseite angeordnet und über eine Förderstrecke unmittelbar mit einer Gruppe von Regalen verbunden ist. Da alle Kommissionierplätze dieser Regalgruppe auf eine gemeinsame Förderstrecke zugreifen, müssen alle Waren jeweils an allen Kommissionierplätzen vorbeigeführt werden. Die erreichbare Durchsatzleistung ist somit von der Länge der Regale abhängig. Eine klimatische Trennung zwischen Kommissionierplätzen und Regalen ist dabei nicht möglich, ebensowenig eine Verbindung mit anderen Regalgruppen bei Ausfall eines Regalbediengerätes.

Ferner ist aus der DE 297 24 039 U1 eine dem Oberbegriff des Anspruchs 1 entsprechende Kommissionieranlage mit einem als Behälterlager ausgebildeten Regallager bekannt. Die Kommissionieranlage weist Fördereinrichtungen auf, welche sich jeweils entlang von parallel zueinander angeordneten Lagergassen bewegen und Behälter aus dem Regallager zu stirnseitig vor dem Regallager vorgesehenen Kommissionierplätzen transportieren. Zwischen dem Regallager und den Kommissionierplätzen befindet sich eine Verteileinrichtung, welche die von den Fördereinrichtungen übernommenen Behälter auf die Kommissionierplätze verteilt.

Ziel der vorliegenden Erfindung ist es, ein Materialflußsystem der eingangs genannten Art und ein Verfahren zur Kommissionierung von Waren anzugeben, womit eine Entzerrung der Materialströme und eine höhere Durchsatzleistung der gesamten Anlage erreicht werden können.

Erfindungsgemäß wird dieses Ziel bei einem Materialflußsystem der eingangs genannten Art dadurch erreicht, daß in der Vorzone eine Mehrzahl von Kommissionierplätzen vorgesehen ist, daß jeder Kommissionierplatz mit einer Anzahl von Lagergassen über kreuzungsfrei geführte Förderstrecken verbunden ist und daß ein Transportsystem vorgesehen ist, um an einem Kommissionierplatz mit Waren der zugeordneten Lagergassen zusammengestellte Teil-Kommissioniereinheiten zu einem anderen Kommissionierplatz zu befördern.

Durch diese erfindungsgemäße Gestaltung des Materialflußsystems werden also alle Materialströme von einer Lagergasse bis zu einem Kommissionierplatz kreuzungsfrei geführt, so daß jede Förderstrecke ihren maximalen Durchsatz bis hin zum Kommissionierplatz befördern kann. An einem solchen Kommissionierplatz werden alle Warenbewegungen, Warenentnahme oder Warenaufgabe, für die angeschlossenen, z.B. zwei, Lagergassen erledigt. Für die Warenbewegungen an den restlichen Lagergassen werden ein oder mehrere gleiche Systeme aufgebaut. Die Verbindung der Systeme untereinander erfolgt über eine wahlfreie Weiterreichung der Aufträge von einem Kommissionierplatz zum nächsten, nachdem eine Teilkommissionierung mit allen Waren des Auftrags, die von den angeschlossenen Lagergassen aus bedient werden können, abgeschlossen ist.

Bei dem erfindungsgemäßen System ist die Vorzone mit den einzelnen Kommissionierplätzen stirnseitig vor dem Regalbereich angeordnet, so daß nach Bedarf auch eine mehr oder weniger starke Trennung bzw. Isolierung zwischen Regalen und Kommissionierplätzen möglich ist. Auf diese Weise können beispielsweise die Kommissionierplätze klimatisch bzw. thermisch von Kühlregalen getrennt werden. Weiterhin ist durch die stirnseitige Anordnung auch die Anzahl und Anordnung der Kommissionierplätze unabhängig von der Länge und der Durchsatzleistung der vorzugsweise automatisch bedienten Regale.

Im einfachsten Fall sind einem Kommissionierplatz jeweils die Förderstrecken von zwei Lagergassen zugeordnet, die in einer Ebene kreuzungsfrei zwischen den Lagergassen und dem Kommissionierplatz geführt werden können. Es können aber auch mehr als zwei Fördersystemen von jeweils zwei Lagergassen mit einem Kommissionierplatz verbunden werden, wenn sie in verschiedenen Ebenen angelegt werden. In diesem Fall kommt es lediglich darauf an, daß der Kommissionierer (Mensch oder vorzugsweise Roboter) die betreffenden Warenströme bewältigen kann.

Die Kommissionierplätze in der Vorzone sind voneinander unabhängig jeweils mit ihren zugeordneten Regalen verbunden, wobei sie untereinander aber wahlweise über den Kommissionierförderer Teilkommissioniereinheiten austauschen können. Dieser Kommissionierförderer läuft bidirektional und kann also einen Austausch jeweils zwischen zwei bestimmten Kommissionierplätzen unabhängig von den übrigen vornehmen, ohne daß die Kommissionierplätze in einer bestimmten Reihenfolge angefahren werden müssen. Durch die Entkopplung der Kommissionierplätze voneinander können diese auch frei eingesetzt werden, um beispielsweise Auftragsspitzen abzutragen oder aufeinanderfolgende Bearbeitungen von Teil-Kommissioniereinheiten zeitlich zu entkoppeln. Zu diesem Zweck sind im Bereich der Vorzone vorzugsweise auch zusätzliche Lagerregal-Einheiten vorgesehen, die als Puffer einsetzbar sind. Mit einer derartigen Ausgestaltung können der Vorzone auch Veredelungsfunktionen zugeordnet werden, beispielsweise können für teilkommissionierte Einheiten Trocknungszeiten oder Ruhezeiten für beispielsweise chemische oder biologische Reaktionen vorgesehen werden. Ein anderes Beispiel wäre das Schockfrieren von Kommissioniereinheiten.

Lediglich für den Fall, daß einzelne Komponenten eines solchen Teilkommissioniersystems ausfallen, ist es in einer Weiterbildung der Erfindung zweckmäßig, wahlweise mit den Förderstrecken der unterschiedlichen Lagergassen koppelbare Querförderstrecken vorzusehen. In diesem Fall werden dann die Warenströme von nicht einsatzfähigen Teilstrecken über die Querförderstrecken abgeleitet und einem oder mehreren anderen Kommissionierplätzen zugeführt. Bei einem solchen Notbetrieb ist der Durchsatz natürlich wie bei herkömmlichen Anlagen durch die Teilstrecken mit der höchsten Belastung bestimmt.

Ein erfindungsgemäßes Kommissionierverfahren in dem genannten Materialflußsystem ist dadurch gekennzeichnet, daß jeweils die Materialströme von und zu einer Anzahl von Lagergassen kreuzunsfrei zu einem Kommissionierplatz geführt werden, wo Entnahmeeinheiten aus den betreffenden Lagergassen zu einer Teil-Kommissioniereinheit zusammengestellt werden, und daß die Teil-Kommissioniereinheiten an einen anderen Kommissionierplatz zur Ergänzung mit Entnahmeeinheiten aus weiteren Lagergassen weitergeleitet werden. In einer Ausgestaltung des Verfahrens ist vorgesehen, daß bei Auftreten einer Störung im Bereich eines Kommissionierplatzes die zugeordneten Warenströme über wahlweise koppelbare Kreuzungspunkte und Querförderstrecken auf die Förderstrecken eines oder mehrerer anderer Kommissionierplätze geleitet und zusammen mit deren Materialströmen dem jeweils anderen Kommissionierplatz bzw. den anderen Kommissionierplätzen zugeführt werden.

Die Erfindung wird nachfolgend an Ausführungsbeispielen anhand der Zeichnung näher erläutert. Es zeigt
Figur 1 das Schema eines Hochregällagers mit einer erfindungsgemäß ausgestalteten Kommissionier-Vorzone,
Figur 2 den Verlauf der Materialströme in einem Lager nach Figur 1 bei Normalbetrieb und
Figur 3 den Verlauf der Materialströme, ebenfalls im Normalbetrieb, jedoch mit Materialströmen in zwei Ebenen.

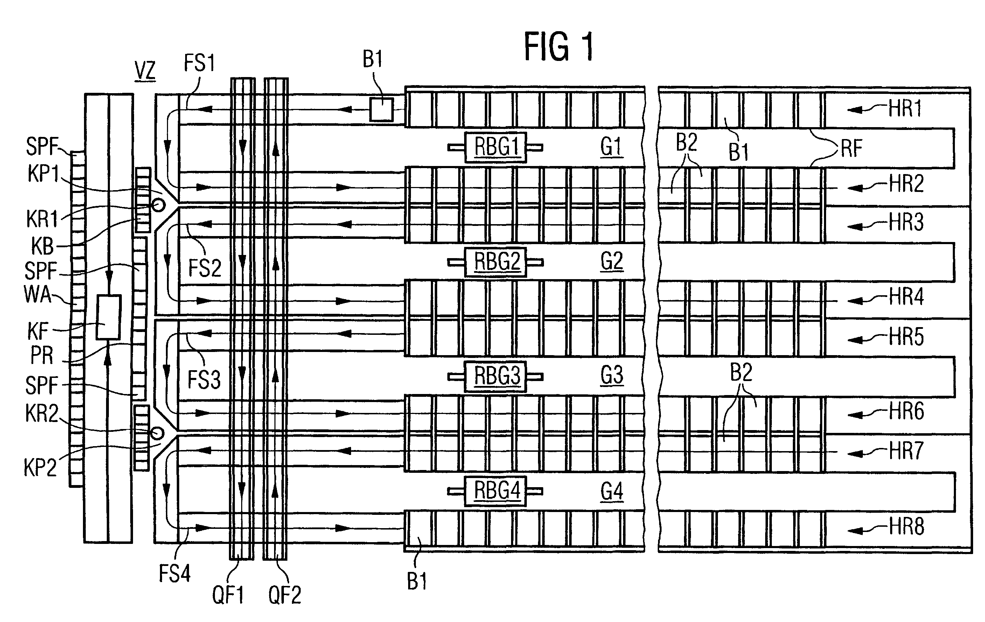

Das in Figur 1 schematisch gezeigte Hochregallager besitzt eine Anzahl, im gezeigten Beispiel acht, Hochregale HR1 bis HR8, wobei in den einzelnen Regalen jeweils Regalfächer RF zur Aufnahme von Behältern, beispielsweise von jeweils einem großen Behälter B1 oder von zwei kleineren Behältern B2, ausgelegt sind. Zwischen jeweils zwei Regalen liegt eine Lagergasse G1 bis G4, und in jeder Lagergasse ist ein Regalbediengerät RBG1 bis RBG4 angeordnet, mittels dessen jedes Regalfach zu beiden Seiten der Lagergasse erreichbar ist. In einer Vorzone VZ, die stirnseitig vor den jeweiligen Regalreihen liegt, sind Förderstrecken FS1 bis FS4 angeordnet. Jeder Regalgasse G1 bis G4 ist also jeweils eine Förderstrecke FS1 bis FS4 zugeordnet und jede Förderstrecke führt von ihrer zugehörigen Regalgasse bis zu einem Kommissionierplatz KP1 bzw. KP2 und wieder zurück zu der betreffenden Regalgasse G1 bis G4.

Quer zu den Förderstrecken FS1 bis FS4 sind jeweils zusätzliche Quer-Förderstrecken QF1 und QF2 angeordnet, die einander entgegengesetzte Förderrichtungen besitzen und die im Normalbetrieb keine Verknüpfung mit den Förderstrecken FS1 bis FS4 haben. Lediglich bei Ausfall eines Teiles der Anlage können diese Querförderstrecken QF1 und QF2 an Teilstrecken der Förderstrecken angekoppelt werden, um jeweils einen Warenstrom aus einem nicht funktionierenden Anlagenteil oder Kommissionierplatz zu einem anderen Kommissionierplatz zu befördern.

An den Kommissionierplätzen KP1 und KP2 sind Kommissionierbehälter KB vorgesehen, in denen die von einem Kommissionierer KR1 oder KR2 am Kommissionierplatz KP1 bzw. KP2 entnommenen Waren zusammengestellt werden. Eine Kommissionier-Fördereinrichtung KF, die beispielsweise ähnlich wie ein Regalbediengerät gebaut sein kann, verbindet die verschiedenen Kommissionierplätze KP1 und KP2, um nicht vollständig kommissionierte Einheiten von einem Kommissionierplatz zum Zweck der Vervollständigung zu einem weiteren Kommissionierplatz zu bringen. Vollständige Kommmissioniereinheiten werden dann über eine Warenausgabe WA abtransportiert.

Die Warenausgabe WA ist als Lagerregal ausgestaltet und kann somit nicht nur zur Warenausgabe, sondern auch zur Zwischenspeicherung in einer Pufferfunktion verwendet werden. Zusätzlich ist in der Vorzone ein weiteres Pufferregal PR für den gleichen Zweck angeordnet. Sowohl im Pufferregal PR als auch in der Warenausgabe WA können dabei Spezialfächer SPF angeordnet sein, in denen Veredelungsschritte für (Teil-) Kommissioniereinheiten ausgeführt werden können, wie beispielsweise Schockfrieren, Ruhezeiten, Trocknungszeiten, chemische oder biologische Reaktionen.
Die Funktion des Materialflußsystems gemäß Figur 1 ist damit im wesentlichen bereits klar. Ein Regalbediengerät, zum Beispiel RBG1, entnimmt aus einem Regalfach RF einen Behälter B1, legt ihn auf die Förderstrecke FS1, wo er bis zum Kommissionierplatz KP1 transportiert wird. Ein Kommissionierer, der ein Mensch oder vorzugsweise ein Kommissionier-Roboter sein kann, entnimmt die gewünschte Menge aus dem Behälter B1 und legt sie in einen Kommissionierbehälter KB. Der Behälter B1 wird auf der Förderstrecke FS1 wieder zurück zur Regalgasse RG1 gebracht, wo er mit dem Regalbediengerät RBG1 in eines der leeren Fächer RF eingelegt wird. Auf diese Weise wird ein ständiger Strom an Behältern B1 oder B2 über die verschiedenen Förderstrecken FS1 bis FS4 befördert. Am Kommissionierplatz KP1 werden aus den Warenströmen der Förderstrecken FS1 und FS2, die kreuzungsfrei bis zum Kommissionierplatz verlaufen, die jeweils gewünschten Waren entnommen und zu Teil-Kommissioniereinheiten zusammengestellt. Wenn alle Waren einer Kommissioniereinheit bereits aus der Lagergasse G1 beschafft werden, kann auch am Kommissionierplatz KP1 bereits eine vollständige Kommissioniereinheit zusammengestellt werden. Ist dies aber nicht der Fall, so wird die gebildete Teil-Kommissioniereinheit über den Kommissionierförderer KF an einen weiteren Kommissionierplatz, zum Beispiel KP2, weitergegeben, wo weitere Waren aus den Lagergassen G3 und G4 in der eben geschilderten Weise zugeführt und den Teil-Kommissioniereinheiten hinzugefügt werden. Die vervollständigen Kommissioniereinheiten werden dann über die Warenausgabe WA abgegeben.

Die Funktion des Pufferregals PR sowie der Spezialfächer PF in Form von Veredelungsschritten, die zwischen oder nach den Kommissionierschritten erfolgen können, wurden oben bereits erwähnt.

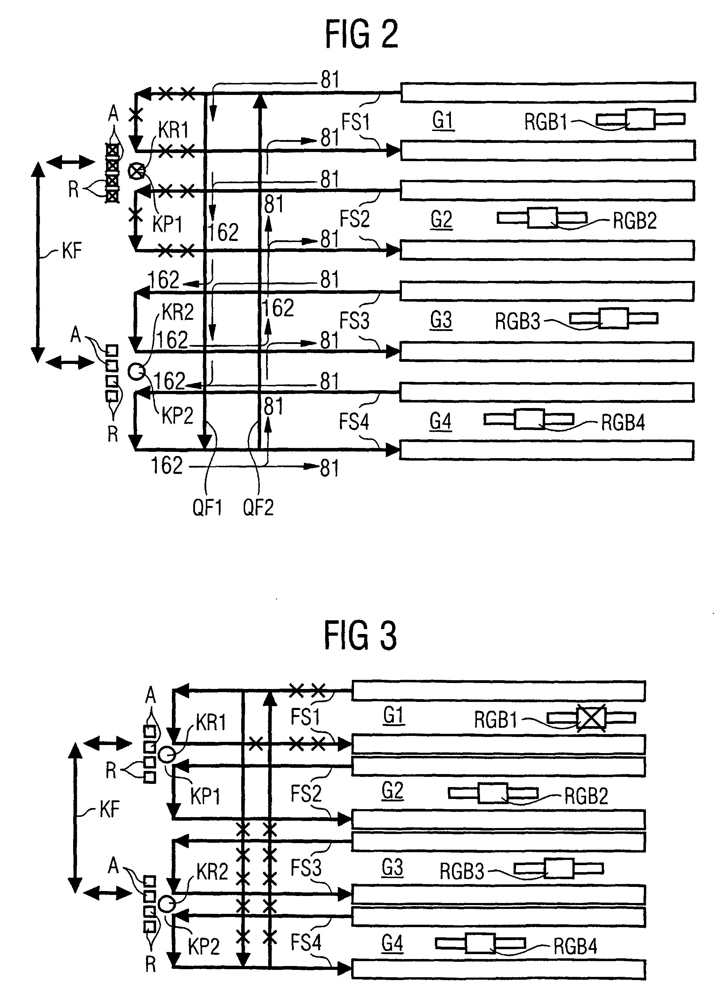

Figur 2 zeigt den Verlauf der Warenströme im Normalbetrieb. Wie anhand von Figur 1 bereits erläutert, verlaufen die Warenströme von der Lagergasse G1 über die Förderstrecke FS1 und von der Lagergasse G2 über die Förderstrecke FS2 kreuzungsfrei zum Kommissionierplatz KP1, wo ein Kommissionierroboter KR1 entsprechende Waren entnimmt, um an Auftragspositionen A jeweils Kommissioniereinheiten zusammenzustellen. Die teilweise geleerten Lagerbehälter wandern in die Rücklagerpositionen R, von wo sie - gegebenenfalls mit neuen Waren gefüllt - über die gleichen Förderstrecken FS1 bzw. FS2 in ihre Lagergassen zurückgeführt werden.

Der gleiche Vorgang erfolgt bei den Warenströmen aus den Lagergassen G3 und G4, die ebenfalls kreuzungsfrei über die zugehörigen Förderstrecken FS3 und FS4 dem Kommissionierplatz KP2 zugeführt und von dem Kommissionierroboter KR2 bearbeitet werden. Die Querförderstrecken QF1 und QF2 sind in diesem Fall nicht in Betrieb. In Figur 2 sind sie deshalb über ihre gesamte Länge durchkreuzt bezeichnet.

Figur 3 zeigt eine Möglichkeit, bei dem erfindungsgemäßen System zusätzlich weitere Lagergassen über einen Kommissionierplatz zu verarbeiten. In diesem Fall verlaufen die Förderstrecken in zwei verschiedenen Ebenen. So sind die Förderstrecken FS2 und FS3 aus den Lagergassen G2 und G3 kreuzungsfrei in einer unteren Ebene zu dem Kommissionierplatz KP3 geführt, wo sie über einen Kommissionierroboter KR3 verarbeitet werden. Die Warenströme aus den Lagergassen G1 und G4 werden dagegen über ihre Förderstrecken FS1' und FS4' in einer oberen Ebene ebenfalls kreuzungsfrei zu dem gleichen Kommissionierplatz KP3 geführt und mit dem Kommissionierroboter KR3 verarbeitet. Dies hat natürlich nur einen Sinn, wenn der Kommissionierroboter vier Warenströme gleichzeitig verarbeiten kann. An einem weiteren Kommissionierplatz KP4 können dann die ebenfalls in zwei Ebenen ankommenden Warenströme, nämlich die Warenströme aus den Lagergassen G6 und G7 über ihre Förderstrecken FS6 und FS7 sowie die Warenströme aus den Lagergassen G5 und G8 über ihre Förderstrecken FS7' und FS8' über den Kommissionierroboter KR4 verarbeitet werden. Auch in diesem Fall werden Teil-Kommissioniereinheiten über den Kommissionierförderer KF von einem Kommissionierplatz KP3 zum anderen Kommissionierplatz KP4 und umgekehrt weitergegeben.

Bei dem beschriebenen Normalbetrieb eines erfindungsgemäßen Materialflußsystems sind alle Förderstrecken und deren Teilstrecken gleichmäßig mit den Warenströmen belastet.

## Patentansprüche

1. Materialflußsystem mit einem Regallager mit einer Mehrzahl von Lagergassen (G1 bis G4; G5 bis G8), wobei jeweils Förderstrecken (FS1 bis FS4;FS1',FS4';FS5',FS6,FS7,FS8') die Regale (HR1 bis HR8) einer Lagergasse (G1 bis G4;G5 bis G8) mit einer Vorzone (VZ) verbinden, um Lagereinheiten (B1,B2) aus einem Regal (HR1 bis HR8) einer Lagergasse (G1 bis G) in die Vorzone (VZ) und aus der Vorzone (VZ) in ein Regal der Lagergasse (G1 bis G8) zu transportieren, und wobei in der Vorzone (VZ) mindestens ein Kommissionierplatz (KP1,KP2;KP3,KP4) eingerichtet ist, um Waren aus einer Lagereinheit (B1,B2) zu entnehmen und/oder Waren in die Lagereinheit einzubringen, **dadurch gekennzeichnet, daß** die Vorzone (VZ) den Lagergassen (G1 bis G8) und Regalen (HR1 bis HR8) stirnseitig vorgelagert ist und eine Mehrzahl von nebeneinander liegenden Kommissionierplätzen (KP1 bis KP4) aufweist, von denen jeder mit einer Anzahl von Lagergassen (G1 bis G8) über kreuzungsfrei geführte Förderstrecken (FS1 bis FS4; FS1',FS4', FS5', FS6, FS7,FS8') verbunden ist, und daß ein Transportsystem (KF) vorgesehen ist, um an einem Kommissionierplatz (KP1) mit Waren der zugeordneten Lagergassen (G1,G2) zusammengestellte Teil-Kommissioniereinheiten zu einem anderen Kommissionierplatz (KP2) zu befördern.

2. Materialflußsystem nach Anspruch 1,
**dadurch gekennzeichnet, daß** jeweils zwei Lagergassen (G1,G2;G3,G4) mit einem Kommissionierplatz (KP1;KP2) über kreuzungsfreie Förderstrecken (FS1, FS2;FS3,FS4) verbunden sind.

3. Materialflußsystem nach Anspruch 1,
**dadurch gekennzeichnet, daß** jeweils mehr als zwei Lagergassen (G1,G2,G3,G4) mit einem Kommissionierplatz (KP3) verbunden sind und daß die Förderstrecken (FS1',FS4';FS2,FS3) in unterschiedlichen horizontalen Ebenen kreuzungsfrei geführt sind.

4. Materialflußsystem nach einem der Ansprüche 1 bis 3, **dadurch gekennzeichnet, daß** zwischen den Förderstrecken der unterschiedlichen Kommissionierplätze (KP1,KP2) Querförderstrecken (QF1,QF2) vorgesehen sind, welche für einen Notbetrieb mit den Förderstrecken (FS1,FS2,FS3,FS4) unterschiedlicher Kommissionierplätze (KP1,KP2) verknüpfbar sind, um die Warenströme aus einer Lagergasse (G1,G2) zu einem einer anderen Lagergasse (G3,G4) zugeordneten Kommissionierplatz (KP2) zu führen.

5. Materialflußsystem nach einem der Ansprüche 1 bis 4, **dadurch gekennzeichnet, daß** die Vorzone (VZ) von den Regalen (HR1 bis HR8) isolierbar ist.

6. Materialflußsystem nach Anspruch 5,
**dadurch gekennzeichnet, daß** die Vorzone (VZ) von den Regalen (HR1 bis HR8) klimatisch, insbesondere thermisch, abtrennbar ist.

7. Materialflußsystem nach einem der Ansprüche 1 bis 6,
**dadurch gekennzeichnet, daß** in der Vorzone Regale (TR,WA) zur Zwischenlagerung von Teil-Kommissioniereinheiten vorgesehen sind.

8. Materialflußsystem nach Anspruch 7,
**dadurch gekennzeichnet, daß** in der Vorzone (VZ) Regaleinheiten (SPF) zur Sonderbehandlung von Teil-Kommissioniereinheiten vorgesehen sind.

9. Materialflußsystem nach einem der Ansprüche 1 bis 8,
**dadurch gekennzeichnet, daß** an den Kommissionierplätzen (KP1 bis KP4) jeweils Kommissionierroboter vorgesehen sind.

10. Verfahren zur Kommissionierung von Waren aus einem Regallager mit einer Mehrzahl von Lagergassen G1 bis G8) und einer Vorzone (VZ), wobei jeweils ein Materialstrom von Lagereinheiten aus einem Regal einer Lagergasse (G1 bis G8) in die Vorzone (VZ) geführt wird, wobei in der Vorzone Waren aus den Lagereinheiten entnommen und/oder Waren in die Lagereinheiten des Materialstroms eingebracht werden und wobei entsprechend veränderte Lagereinheiten in ein Regal der Lagergasse (G1 bis G8) zurückgebracht werden,
**dadurch gekennzeichnet, daß** jeweils die Materialströme von und zu einer Anzahl von Lagergassen (G1 bis G8) kreuzungsfrei zu einem Kommissionierplatz (KP1,KP2,KP3,KP4) geführt werden, wo Entnahmeeinheiten aus den betreffenden Lagergassen (G1 bis G8) zu einer Teil-Kommissioniereinheit zusammengestellt werden, und daß die Teil-Kommissioniereinheiten an einen anderen Kommissionierplatz (KP2,KP1) zur Ergänzung mit Entnahmeeinheiten aus weiteren Lagergassen weitergeleitet werden.

11. Verfahren nach Anspruch 10,
**dadurch gekennzeichnet, daß** bei Auftreten einer Störung im Bereich eines Kommissionierplatzes (KP1) die zugeordneten Warenströme über wahlweise koppelbare Schnittpunkte und Querförderstrecken (QF1,QF2) auf die Förderstrecken (FS1 bis FS4) eines oder mehrerer anderer Kommissionierplätze (KP2,KP1) geleitet und zusammen mit deren Materialströmen dem anderen Kommissionierplatz (KP2) bzw. den anderen Kommissionierplätzen zugeführt werden.

12. Verfahren nach Anspruch 10 oder 11,
**dadurch gekennzeichnet, daß** Kommissioniereinheiten oder Teil-Kommissioniereinheiten im Bereich der Vorzone einer Veredelung unterzogen werden.

## Claims

1. Material-handling system with a rack store with a plurality of storage aisles (G1 to G4; G5 to G8), it being the case that conveying routes (FS1 to FS4; FS1', FS4'; FS5', FS6, FS7, FS8') each connect the racks (HR1 to HR8) of a storage aisle (G1 to G4; G5 to G8) to a preliminary zone (VZ), in order to transport storage units (B1, B2) from a rack (HR1 to HR8) of a storage aisle (G1 to G) into the preliminary zone (VZ) and from the preliminary zone (VZ) into a rack of the storage aisle (G1 to G8), and that at least one order-picking location (KP1, KP2; KP3, KP4) is set up in the preliminary zone (VZ) in order to remove goods from a storage unit (B1, B2) and/or to introduce goods into the storage unit, **characterized in that** the preliminary zone (VZ) is arranged upstream of the storage aisles (G1 to G8) and racks (HR1 to HR8), at the end thereof, and has a plurality of order-picking locations (KP1 to KP4) which are located one beside the other and of which each is connected to a number of storage aisles (G1 to G8) via conveying routes (FS1 to FS4; FS1', FS4', FS5', FS6, FS7, FS8') which are guided without crossovers, and **in that** a transporting system (KF) is provided in order for order-picking sub-units which are put together with goods from the associated storage aisles (G1, G2) at an order-picking location (KP1) to be conveyed to another order-picking location (KP2).

2. Material-handling system according to Claim 1, **characterized in that** in each case two storage aisles (G1, G2; G3, G4) are connected to an order-picking location (KP1; KP2) via crossover-free conveying routes (FS1, FS2; FS3, FS4).

3. Material-handling system according to Claim 1, **characterized in that** in each case more than two storage aisles (G1, G2, G3, G4) are connected to an order-picking location (KP3), and **in that** the conveying routes (FS1', FS4'; FS2, FS3) are guided, without crossovers, in different horizontal planes.

4. Material-handling system according to one of Claims 1 to 3, **characterized in that** provided between the conveying routes of the different order-picking locations (KP1, KP2) are transverse conveying routes (QF1, QF2) which, for emergency operation, can be linked up to the conveying routes (FS1, FS2, FS3, FS4) of different order-picking locations (KP1, KP2) in order to guide the streams of goods from one storage aisle (G1, G2) to an order-picking location (KP2) assigned to another storage aisle (G3, G4).

5. Material-handling system according to one of Claims 1 to 4, **characterized in that** the preliminary zone (VZ) can be isolated from the racks (HR1 to HR8).

6. Material-handling system according to Claim 5, **characterized in that** the preliminary zone (VZ) can be separated off climatically, in particular thermally, from the racks (HR1 to HR8).

7. Material-handling system according to one of Claims 1 to 6, **characterized in that** racks (TR, WA) for the interim storage of order-picking sub-units are provided in the preliminary zone.

8. Material-handling system according to Claim 7, **characterized in that** rack units (SPF) for the special treatment of order-picking sub-units are provided in the preliminary zone (VZ).

9. Material-handling system according to one of Claims 1 to 8, **characterized in that** order-picking robots are provided in each case at the order-picking locations (KP1 to KP4).

10. Procedure for order-picking goods from a rack store with a plurality of storage aisles (G1 to G8) and a preliminary zone (VZ), it being the case that in each case one stream of storage units is guided from a rack of a storage aisle (G1 to G8) into the preliminary zone (VZ), that, in the preliminary zone, goods are removed from the storage units, and/or goods are introduced into the storage units, of the material stream, and that correspondingly altered storage units are moved back into a rack of the storage aisle (G1 to G8), **characterized in that** the material streams from and to a number of storage aisles (G1 to G8) in each case are guided without crossovers to an order-picking location (KP1, KP2, KP3, KP4), where removal units from the relevant storage aisles (G1 to G8) are put together to form an order-picking sub-unit, and **in that** the order-picking sub-units are passed on to another order-picking location (KP2, KP1) in order to be supplemented with removal units from further storage aisles.

11. Procedure according to Claim 10, **characterized in that**, if disruption occurs in the region of an order-picking location (KP1), the associated streams of goods are directed, via optionally coupleable points of intersection and transverse conveying routes (QF1, QF2), to the conveying routes (FS1 to FS4) of one or more other order-picking locations (KP2, KP1) and, together with the material streams thereof, fed to the other order-picking location (KP2) or the other order-picking locations.

12. Procedure according to Claim 10 or 11, **characterized in that** order-picking units or order-picking sub-units undergo improving treatment in the region of the preliminary zone.

## Revendications

1. Système de manutention des matériaux comportant un entrepôt à rayonnages muni d'un grand nombre d'allées d'entrepôt (G1 à G4, G5 à G8), pour lequel des voies de transport (FS1 à FS4 ; FS1', FS4' ; FS5', FS6, FS7, FS8') relient respectivement les rayonnages (HR1 à HR8) d'une allée d'entrepôt (G1 à G4, G5 à G8) à une zone avant (VZ) pour que des unités d'entreposage (B1, B2) soient transportées d'un rayonnage (HR1 à HR8) d'une allée d'entrepôt (G1 à G) dans la zone avant (VZ) et transportées de la zone avant (VZ) dans un rayonnage de l'allée d'entrepôt (G1 à G8) et pour lequel il y a dans la zone avant (VZ) au moins un poste de préparation (KP1, KP2 ; KP3, KP4) destiné à prélever des marchandises d'une unité d'entreposage (B1, B2) et/ou à introduire des marchandises dans l'unité d'entreposage, **caractérisé en ce que** la zone avant (VZ) est placée frontalement devant des allées d'entrepôt (G1 à G8) et des rayonnages (HR1 à HR8) et présente une multiplicité de postes de préparation (KP1 à KP4) côte à côte, dont chacun est relié à un certain nombre d'allées d'entrepôt (G1 à G8) au moyen de voies de transport (FS1 à FS4 ; FS1', FS4' ; FS5', FS6, FS7, FS8') réalisées sans intersection et **en ce que** l'on prévoit un système de transport (KF) pour que des unités de préparation partielle rassemblées à un poste de préparation (KP1) comportant des marchandises des allées d'entrepôt associées soient convoyées à un autre poste de préparation (KP2).

2. Système de manutention des matériaux selon la revendication 1, **caractérisé en ce que** deux allées d'entrepôt (G1, G2 ; G3, G4) sont respectivement reliées à un poste de préparation (KP1, KP2) par l'intermédiaire de voies de transport (FS1, FS2 ; FS3, FS4) sans intersection.

3. Système de manutention des matériaux selon la revendication 1, **caractérisé en ce que** plus de deux allées d'entrepôt (G1, G2, G3, G4) sont respectivement reliées à un poste de préparation (KP3) et les voies de transport (FS1', FS4' ; FS2, FS3) sont conduites sans intersection dans des plans horizontaux différents.

4. Système de manutention des matériaux selon l'une des revendications 1 à 3, **caractérisé en ce que**, entre les voies de transport des différents postes de préparation (KP1, KP2), l'on prévoit des voies de transport transversales (QF1, QF2) qu'on peut relier aux voies de transport (FS1, FS2 ; FS3, FS4) de différents postes de préparation (KP1, KP2) différents pour assurer un fonctionnement de secours afin de conduire les flux de marchandises provenant d'une allée d'entrepôt (G1, G2) à un poste de préparation (KP2) associé à une autre allée d'entrepôt (G3, G4).

5. Système de manutention des matériaux selon l'une des revendications 1 à 4, **caractérisé en ce que** la zone avant (VZ) peut être isolée des rayonnages (HR1 à HR8).

6. Système de manutention des matériaux selon la revendication 5, **caractérisé en ce que** la zone avant (VZ) peut être séparée des rayonnages (HR1 à HR8) climatiquement, en particulier thermiquement.

7. Système de manutention des matériaux selon l'une des revendications 1 à 6, **caractérisé en ce que** dans la zone avant l'on prévoit des rayonnages (TR, WA) destinés à stocker temporairement des unités de préparation partielle.

8. Système de manutention des matériaux selon la revendication 7, **caractérisé en ce que**, dans la zone avant (VZ), l'on prévoit des unités de rayonnages (SPF) destinées au traitement spécial d'unités de préparation partielle.

9. Système de manutention des matériaux selon l'une des revendications 1 à 8, **caractérisé en ce que** l'on prévoit à chaque fois des robots de préparation aux postes de préparation (KP1 à KP4).

10. Procédé pour préparer des marchandises provenant d'un entrepôt à rayonnages comportant une multiplicité d'allées d'entrepôt (G1 à G8) et une zone avant (VZ), selon lequel un flux de matériaux composé d'unités d'entreposage est à chaque fois conduit d'un rayonnage d'une allée d'entrepôt (G1 à G8) jusqu'à la zone avant (VZ), selon lequel, dans la zone avant, des marchandises sont prélevées des unités d'entreposage et/ou des marchandises sont introduites dans les unités d'entreposage du flux de matériaux et selon lequel des unités d'entreposage modifiées en conséquence sont rapportées dans un rayonnage de l'allée d'entrepôt (G1 à G8), **caractérisé en ce que** les flux de matériaux qui proviennent et qui sont destinés à une multiplicité d'allées d'entrepôt (G1 à G8) sont respectivement conduits sans intersection à un poste de préparation (KP1, KP2, KP3, KP4) où des unités de prélèvement provenant des allées d'entrepôt (G1 à G8) concernées sont rassemblées en une unité de préparation partielle et **en ce que** les unités de préparation partielle sont transmises à un autre poste de préparation (KP2, KP1) pour qu'elles soient complétées par des unités de prélèvement provenant d'autres allées d'entrepôt.

11. Procédé selon la revendication 10, **caractérisé en ce que**, quand un dysfonctionnement apparaît dans la zone d'un poste de préparation (KP1), les flux de marchandises associés sont conduits sur les voies de transport (FS1 à FS4) d'un ou de plusieurs autres postes de préparation (KP2, KP1) par l'intermédiaire de points d'intersection et de voies de transport transversales (QF1, QF2) qu'on peut coupler optionnellement et sont acheminés conjointement avec leurs flux de matériaux à l'autre poste de préparation (KP2) ou aux autres postes de préparation.

12. Procédé selon la revendication 10 ou 11, **caractérisé en ce que** les unités de préparation ou les unités de préparation partielle sont soumises à une transformation dans la région de la zone avant.
